# EUROPEAN PATENT APPLICATION

(11) **EP 4 796 415 A1**
(43) Date of publication of application: **26.08.2026**
(21) Application number: 26158979.0
(22) Date of filing: 17.02.2026
(51) Int. Cl.: B62D 1/20, B62D 3/02, B62D 3/08, B62D 5/04, F16H 1/14

(54) **MODULAR ELECTRIC POWER STEERING UNIT WITH BEVEL INPUT FOR FLEXIBLE PACKAGING IN COMMERCIAL VEHICLES WITH LINEAR STEERING GEAR**

(30) Priority: 24.02.2025 US 202519060852
(71) Applicant: ZF CV Systems Global GmbH, 3006 Bern (CH)
(72) Inventor: Bari, Praful, West Lafayette (US); Harter, Joseph, Yorktown (US)
(74) Representative: Rabe, Dirk-Heinrich

(57) **Abstract**

A linear electric power steering (EPS) system for a commercial vehicle is provided. The EPS system includes an output section coupled with a gear assembly, and the gear assembly is coupled with a ball nut of the linear EPS. The EPS system also includes an input section has a horizontal input end configured to couple with a first end of an input shaft, where a second end of the input shaft is coupled with a steering wheel assembly of the commercial vehicle. The input section includes a bevel box mechanically coupled to the horizontal input end of the input section, the bevel box configured to receive the first end of the input shaft at an angle with respect to the horizontal input end of the input section.

## Description

The present disclosure relates to a linear steering gear for a commercial vehicle.

### BACKGROUND

The landscape of commercial vehicles is evolving quickly to incorporate autonomous and semi-autonomous vehicle technologies. Incorporating such technologies into existing commercial driving systems may require large scale design of driver cabs of commercial vehicles, including the placement of the driver within the driver cabin. Traditional designs of commercial vehicle steering systems are not adaptable. The limited flexibility in the design of steering systems prohibits commercial vehicle steering systems from use in the evolving landscape of autonomous and semi-autonomous vehicle technologies.

### SUMMARY

Embodiments of the present disclosure provide, in a first aspect, a linear electric power steering (EPS) system for a commercial vehicle. The EPS system comprises: an output section configured to mechanically couple with a gear assembly and configured to mechanically couple with a ball nut of the linear EPS system; an input section having a horizontal input end configured to mechanically couple with a first end of an input shaft, a second end of the input shaft being configured to mechanically couple with a steering wheel assembly of the commercial vehicle, the input section comprising: a bevel box mechanically coupled to the horizontal input end and configured to engage the first end of the input shaft at an angle with respect to the horizontal input end, wherein a rotation of the input shaft is transmitted via the bevel box to the output section to cause rotation of the gear assembly, which causes rotation of the ball nut that surrounds a ball screw, and wherein the rotation of the ball nut in a first direction around the ball screw causes a corresponding linear movement of the ball screw to initiate steering of the commercial vehicle.

According to an implementation of the first aspect, the bevel box comprises a second input section to receive the first end of the input shaft.

According to an implementation of the first aspect, the angle at which the second input section of the bevel box is configured to receive the first end of the input shaft is ninety degrees with respect to the horizontal input end of the input section.

According to an implementation of the first aspect, the angle at which the second input section of the bevel box is configured to receive the first end of the input shaft is seventy degrees with respect to the horizontal input end of the input section.

Embodiments of the present disclosure provide, in a second aspect, a method for providing of electric power steering (EPS) system for a commercial vehicle. The method comprises: providing an output section configured to mechanically couple with a gear assembly that is configured to mechanically couple with a ball nut of a linear steering gear; an input section having a horizontal input end configured to mechanically couple with a first end of an input shaft, a second end of the input shaft being configured to mechanically couple with a steering wheel assembly of the commercial vehicle; mechanically coupling a bevel box to the horizontal input end and configured to engage the first end of the input shaft at an angle with respect to the horizontal input end; transmitting a rotation of the input shaft via the bevel box to the output section to cause rotation of the gear assembly, which causes rotation of the ball nut that surrounds a ball screw; and causing a corresponding linear movement of the ball screw to initiate steering of the commercial vehicle based on the rotation of the ball nut.

According to an implementation of the second aspect, the bevel box comprises a second input section to receive the first end of the input shaft.

According to an implementation of the second aspect, the angle at which the second input section of the bevel box is configured to receive the first end of the input shaft is ninety degrees with respect to the horizontal input end of the input section.

According to an implementation of the second aspect, the angle at which the second input section of the bevel box is configured to receive the first end of the input shaft is seventy degrees with respect to the horizontal input end of the input section.

### BRIEF DESCRIPTION OF THE DRAWINGS

Embodiments of the present disclosure will be described in even greater detail below based on the exemplary figures. The present disclosure is not limited to the exemplary embodiments. All features described and/or illustrated herein can be used alone or combined in different combinations in embodiments of the present disclosure. The features and advantages of various embodiments of the present disclosure will become apparent by reading the following detailed description with reference to the attached drawings which illustrate the following:
FIG. 1 illustrates a linear electric power steering system (EPS) of a commercial vehicle with a bevel box, according to one or more examples of the present disclosure;
FIG. 2 illustrates the linear EPS system of FIG. 1 with a bevel box, according to one or more examples of the present disclosure;
FIG. 3 illustrates a portion of the linear EPS system of FIG. 1 with the bevel box, according to one or more examples of the present disclosure;
FIG. 4 illustrates a cross-sectional view of a bevel box mechanically coupled to the linear EPS system of FIG. 3, according to one or more examples of the present disclosure;
FIG. 5 illustrates a portion of the linear EPS system of FIG. 1 with another bevel box, according to one or more examples of the present disclosure; and
FIG. 6 illustrates a cross-sectional view of the bevel box mechanically coupled to the linear EPS system of FIG. 5.

### DETAILED DESCRIPTION

Examples of the presented application will now be described more fully hereinafter with reference to the accompanying FIGs., in which some, but not all, examples of the application are shown. Indeed, the application may be exemplified in different forms and should not be construed as limited to the examples set forth herein; rather, these examples are provided so that the application will satisfy applicable legal requirements. Where possible, any terms expressed in the singular form herein are meant to also include the plural form and vice versa, unless explicitly stated otherwise. Also, as used herein, the term "a" and/or "an" shall mean "one or more" even though the phrase "one or more" is also used herein. Furthermore, when it is said herein that something is "based on" something else, it may be based on one or more other things as well. In other words, unless expressly indicated otherwise, as used herein "based on" means "based at least in part on" or "based at least partially on".

The landscape of commercial vehicles is evolving quickly to incorporate autonomous and semi-autonomous vehicle technologies. However, traditional designs of conventional steering systems commercial vehicles lack adaptability to support multiple driver positions (e.g., left-hand drive, right-hand drive, or center drive), limiting their functionality in the evolving landscape of autonomous and semi-autonomous vehicle technologies. For example, conventional steering gears are configured to receive an input shaft only along a fixed axis from the steering column assembly. The fixed axis configuration to receive the input shaft leads to a lack of flexibility in the design of the linear EPS systems.

Embodiments of the present disclosure provide an improved steering system for commercial trucks, by integrating a bevel box into the linear Electric Power Steering (EPS) system. According to some embodiments, the use of the bevel box may make the steering system more adaptable by allowing the steering system to receive the input shaft at an angle with respect to the horizontal. For example, the bevel box may be configured to receive the input shaft at a ninety-degree (90°) angle with respect to a horizontal axis. In another example, the bevel box may be configured to receive the input shaft at a seventy-degree (70°) angle with respect to the horizontal axis. By allowing the input shaft to be connected to the linear EPS system at an angle with respect to the horizontal axis, linear EPS systems may be configured for a variety of driver positions or be easily adaptable for autonomous or semi-autonomous vehicles, without a considerable redesign of existing engine parts, such as hoses, filter, reservoir, gear, shaft, and pump). This modular design also simplifies installation and maintenance, reducing the overall cost of upkeep.

The use of the bevel box along with the linear EPS system allows for a more compact steering mechanism, optimizes space within the vehicle, and supports a range of driver positions. The use of the bevel box as disclosed herein may enhance the overall efficiency of the steering process and reduce the physical effort required from the driver and ensures better control of the vehicle, even in demanding driving conditions. In addition to improving driver ergonomics and vehicle performance, the use of the bevel box, as disclosed herein also supports integration with modern automatic driver assistance systems (ADAS), such as lane-keeping and collision avoidance technologies. The use of the bevel box increases durability and reduces maintenance needs of the linear EPS system, further enhancing its value, and making it a reliable solution for modern commercial vehicles.

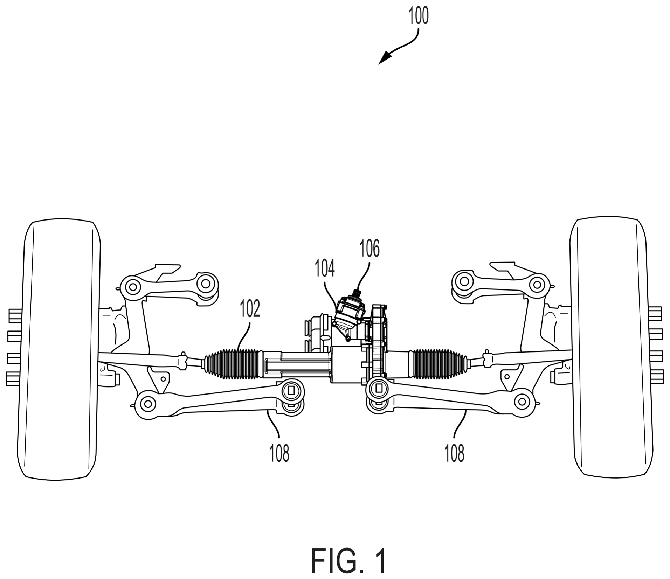

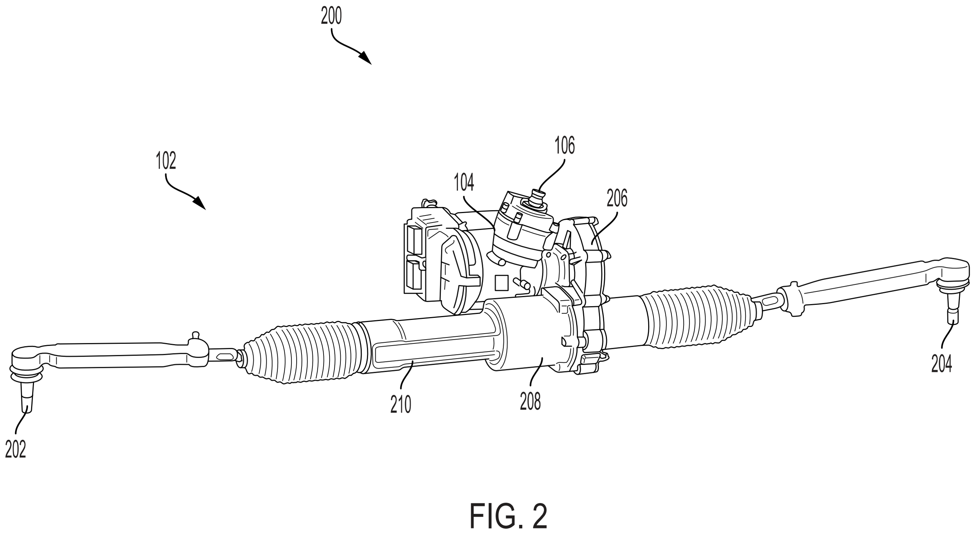

FIG. 1 illustrates a linear electric power steering system (EPS) of a commercial vehicle with a bevel box, according to one or more examples of the present disclosure. Perspective view 100 of FIG. 1 depicts a linear electric power steering (EPS) system 102 as part of a commercial vehicle. In some embodiments, the linear EPS system 102 may be an independent front suspension (IFS) steering system, which may be used for power steering conversions or off-roading. The linear EPS system 102 may be connected to the wheel assemblies 108 on either end. A detailed breakdown of the linear EPS system 102 is provided with respect to FIG. 2.

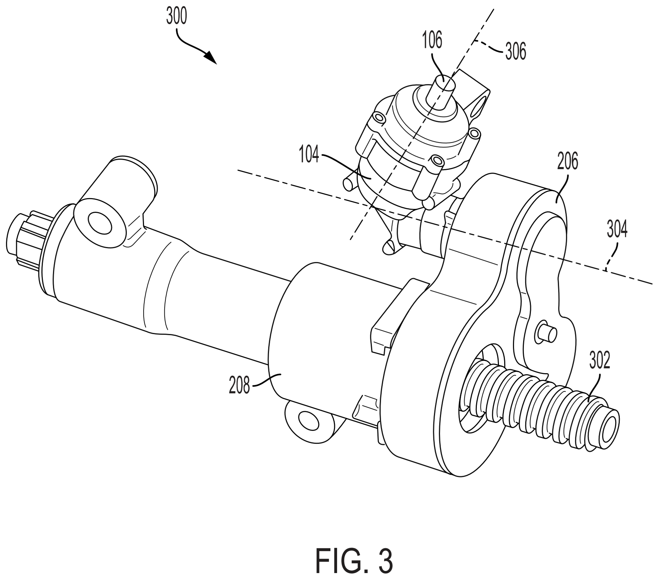

In some embodiments, an input section of the linear EPS system 102 may be configured to receive an input shaft at an input section along a single axis (e.g., substantially horizontal axis). In order to optimize the use of space in the commercial vehicle, a bevel box 104 is attached to the input section of the linear EPS 102. In some embodiments, the bevel box 104 may be mechanically coupled to the input section of the linear EPS system 102. The method the bevel box is attached. The bevel box 104 also includes an input section 106 that is configured to receive the input shaft. The input section 106 of the bevel box 104 may be arranged at an angle with respect to a substantially horizontal axis along which the input section of linear EPS 102 may be aligned. The different angular arrangements of the bevel box are described in more detail with respect to FIGS. 3-6.

FIG. 2 illustrates the linear EPS system of FIG. 1 with a bevel box, according to one or more examples of the present disclosure. Perspective view 200 depicts the linear EPS system 102 of the commercial vehicle along with the bevel box 104. The linear EPS system 102 is connected to a first wheel assembly at a first end 202 and is connected to a second wheel assembly at a second end 204. The linear EPS system 102 includes a housing with two parts. A first part 210 of the housing of the linear EPS 102 encloses a steering screw that extends along the length of the linear EPS 102. A second part 208 of the housing of the linear EPS 102 encloses a steering nut. In accordance with some embodiments, the steering nut is configured to rotate relative to the steering screw and engage the threads of the steering screw. The rotation of the steering nut causes linear motion of the steering screw towards the first end 202 or the second end 204. For example, in case the steering nut rotates in a first direction, the steering screw may move towards the first end 202, which in turn causes the wheels of the commercial vehicle to rotate in a first direction. Alternatively, in case the steering nut rotates in a second direction (e.g., that is opposite to the first direction), the steering screw may move towards the second end 204, which in turn causes the wheels of the commercial vehicle to rotate in a second direction, that is opposite to the first direction.

In some embodiments, the steering nut is mechanically coupled to a gear assembly 206. The gear assembly 206 of the linear EPS system 102 includes, at a first end, an input section that is configured to receive an input shaft. For the purposes of this disclosure, the input section of the gear assembly 206 may also be referred to as the input section of the linear EPS system 102. The input shaft at a first end may be mechanically coupled to a steering wheel assembly, and at a second end may be mechanically coupled to the input section of the linear EPS system 102. In some cases, the input section may be aligned along a horizonal axis. In such cases, the input shaft of the commercial vehicle may be connected to a first end of the gear assembly 206 of the linear EPS system 102 along the horizontal axis via the input section. At a second end, the gear assembly 206 may be mechanically coupled to the steering nut.

According to some embodiments, the gear assembly 206 may include a plurality of gears that are mechanically coupled to one another, such that a rotation of the input shaft, received at the input section of the gear assembly 206, is transmitted via the gear assembly 206 to the steering nut. The rotation of the steering nut leads to linear motion of the steering screw, which leads to steering of the wheels of the commercial vehicle. In some embodiments, a bevel box 104 may be installed on the input section of the gear assembly 206. The bevel box 104 includes an input section 106 that is configured to receive the input shaft. The input section 106 of the bevel box 104 may be arranged at an angle with respect to a horizontal axis. The arrangement of the bevel box 104 is described in more details with respect to FIGS. 3-6.

In some embodiments, the positioning of the bevel box 104 at the input section of the gear assembly 206, at approximately the end of the input shaft of the steering column of the commercial vehicle provides a mechanical advantage that that optimizes the steering effort needed by the driver. The angle of orientation of the bevel box (e.g., 70° or 90°) is adjustable depending on the vehicle design, further improving the adaptability of the system. In some embodiments, the compact size of the bevel box 104 may allow for more flexible driver positions accommodating left-hand drive, right-hand drive, or center driving configurations without the need for significant changes to the structure of the commercial vehicle. This modular design of the bevel box 104 may also simplify installation and maintenance, reducing the overall cost of upkeep.

FIG. 3 illustrates a portion of the linear EPS system of FIG. 1 with the bevel box, according to one or more examples of the present disclosure. Perspective view 300 of FIG. 3 depicts a portion of the linear EPS system 102. An input section of the linear EPS system 102 is generally configured to receive an input shaft along a substantially horizontal axis. In order optimize the use of space in the commercial vehicle, a bevel box 104 is attached to the input section of the EPS system 102. The bevel box 104 includes an input section 106 that is configured to receive the input shaft. The bevel box 104 may be connected to the input section of the linear EPS 102. In some embodiments, the input section of the linear EPS system 102 is part of a first end of the gear assembly 206 and extends along a substantially horizontal axis 304. In some embodiments, the input section 106 of the bevel box 104 may be positioned along an axis 306 that is arranged at an angle of approximately seventy (70) degrees with respect to the substantially horizontal axis 304.

A rotation of the steering wheel of a commercial vehicle, received from a driver of the commercial vehicle, is transmitted via an input shaft of the commercial vehicle to the input section 106 of the bevel box 104. The rotation received at the input section 106 of the bevel box 104 is transmitted through the bevel box to a first end (e.g., an input section) of the gear assembly 206. As described above, the gear assembly 206 may include a plurality of gears that are mechanically coupled to each other. A second end of the gear assembly 206 may be mechanically coupled to a steering nut stored in the second part 208 of the housing of the linear EPS system 102. In such embodiments, the rotation of the input shaft of the commercial vehicle, received at the input section of the gear assembly 206 is transmitted through the gear assembly 206 to the steering nut in a second part 208 of the housing of the linear EPS system 102. In some embodiments, the steering nut may be configured to surround the steering screw 302 and may be configured to rotate with respect to the steering screw 302. The rotation of the steering nut may cause linear motion of the steering screw 302 that may cause the steering motion of the wheels of the commercial vehicle.

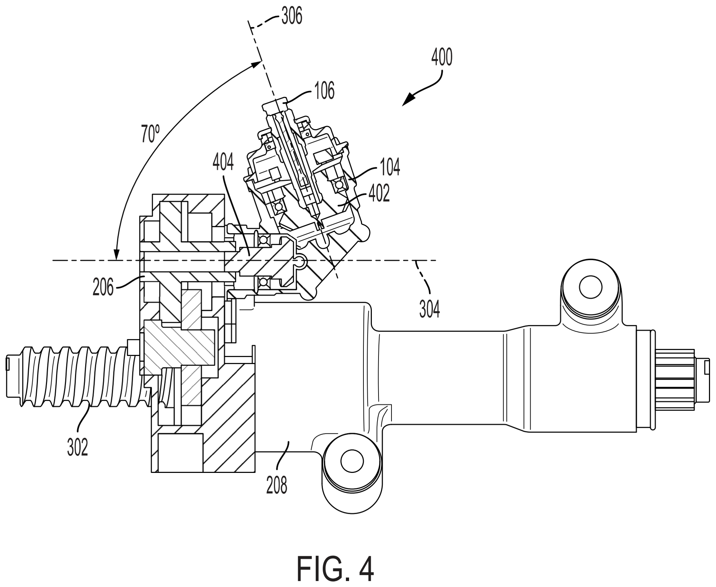

FIG. 4 illustrates a cross-sectional view of a bevel box mechanically coupled to the linear EPS system of FIG. 3, according to one or more examples of the present disclosure. Cross-sectional view 400 of FIG. 4 depicts an inner operation of the bevel box 104, according to embodiments of the present disclosure. As discussed above, the bevel box 104 includes an input section 106 that is configured to receive an input shaft from a steering wheel of the commercial vehicle. According to some embodiments, the input section 106 of the bevel box 104 may be arranged along an axis 306 that is at an angle of seventy (70) degrees with respect to the input section of the linear EPS system 102, that is arranged along the substantially horizontal axis 304. The input section of the 106 of the bevel box 104 may connect to a first bevel gear 402. Similar to the input section 106, the first bevel gear 402 may also be arranged along the axis 306 at the angle of seventy (70) degrees with respect to the substantially horizontal axis 304.

The first bevel gear 402 may be mechanically coupled to a second bevel gear 404. In some embodiments, the second bevel gear 404 may be arranged along the substantially horizontal axis 304. The second bevel gear 404 may be connected to the input section of the gear assembly 206 of the linear EPS system 102. In some embodiments, the first bevel gear 402 and the second bevel gear 404 have gear teeth that are cut on a conical surface. The gear teeth of the first bevel gear 402 engage with corresponding teeth of the second bevel gear 404. In accordance with such embodiments, the first bevel gear 402 may receive rotational motion from an input shaft along an axis 306 that is arranged at an angle of substantially seventy (70) degrees with respect to the substantially horizontal axis 304. The input shaft is mechanically coupled to the input section 106 of the bevel box 104 along the axis 306. The rotation of the first bevel gear 402, may cause rotation of the second bevel gear 404, due to the engagement of gear teeth of the respective bevel gears. The second bevel gear 404 may be mechanically coupled to the gear assembly 206 of the linear EPS system 102 along the substantially horizontal axis 304. The rotation of the first bevel gear 404 and the second bevel gear 404 may transfer the rotational motion received along the axis 306 from the input shaft to rotational motion of the input section of the gear assembly 206 along the substantially horizontal axis 304. Thus, the first bevel gear 402 and the second bevel gear 404 transmit motion and change the direction of force from the input shaft, coming from the steering wheel of the commercial vehicle to the gear assembly 206 of the linear EPS system 102 of the commercial vehicle.

As described above, the gear assembly 206 may include a plurality of gears that are mechanically coupled to each other. A second end of the gear assembly 206 may be mechanically coupled to a steering nut stored in the second part 208 of the housing of the linear EPS system 102. In such embodiments, the rotation of the input shaft of the commercial vehicle, received at the input section 106 of the bevel box 104 is transmitted by the rotation of the first bevel gear 402 and the second bevel gear 404 to the gear assembly 206 to cause rotation of the plurality of gears of the gear assembly 206. The rotation of the plurality of gears of the gear assembly 206 transmits the rotation received at the gear assembly 206 to the steering nut disposed in a second part 208 of the housing of the linear EPS system 102. In some embodiments, the steering nut may be configured to surround the steering screw 302 and may be configured to rotate with respect to the steering screw 302. The rotation of the steering nut may cause linear motion of the steering screw 302 that may cause the steering motion of the wheels of the commercial vehicle.

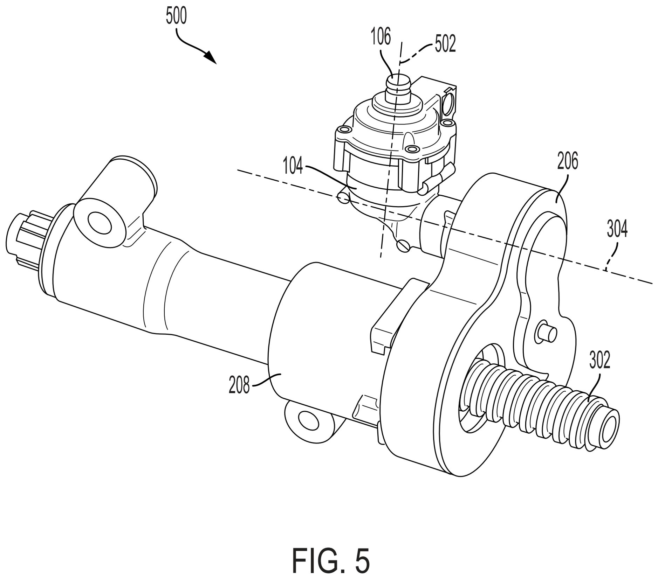

FIG. 5 illustrates a portion of the linear EPS system of FIG. 1 with another bevel box, according to one or more examples of the present disclosure. Perspective view 500 of FIG. 5 depicts a portion of the linear EPS system 102. An input section of the linear EPS system 102 is generally configured to receive an input shaft along a substantially horizontal axis. In order optimize the use of space in the commercial vehicle, a bevel box 104 is attached to the input section of the EPS system 102. The bevel box 104 includes an input section 106 that is configured to receive the input shaft. The bevel box 104 may be connected to the input section of the linear EPS 102. In some embodiments, the input section of the linear EPS system 102 is part of a first end of the gear assembly 206 and extends along a substantially horizontal axis 304. In some embodiments, the input section 106 of the bevel box 104 may be positioned along an axis 502 that is arranged at an angle of approximately ninety (90) degrees with respect to the substantially horizontal axis 304.

A rotation of the steering wheel of a commercial vehicle, received from a driver of the commercial vehicle, is transmitted via an input shaft of the commercial vehicle to the input section 106 of the bevel box 104. The rotation received at the input section 106 of the bevel box 104 is transmitted through the bevel box to a first end (e.g., an input section) of the gear assembly 206. As described above, the gear assembly 206 may include a plurality of gears that are mechanically coupled to each other. A second end of the gear assembly 206 may be mechanically coupled to a steering nut stored in the second part 208 of the housing of the linear EPS system 102. In such embodiments, the rotation of the input shaft of the commercial vehicle, received at the input section of the gear assembly 206 is transmitted through the gear assembly 206 to the steering nut in a second part 208 of the housing of the linear EPS system 102. In some embodiments, the steering nut may be configured to surround the steering screw 302 and may be configured to rotate with respect to the steering screw 302. The rotation of the steering nut may cause linear motion of the steering screw 302 that may cause the steering motion of the wheels of the commercial vehicle.

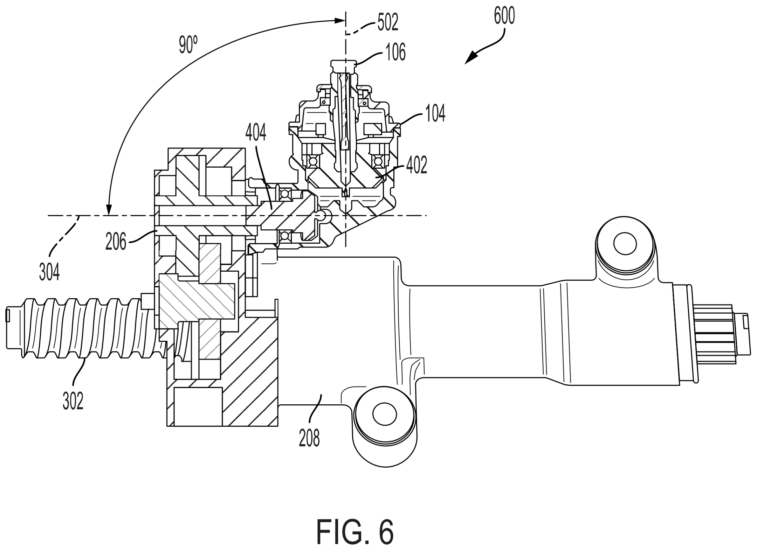

FIG. 6 illustrates a cross-sectional view of a bevel box mechanically coupled to the linear EPS system of FIG. 5, according to one or more examples of the present disclosure. Cross-sectional view 500 of FIG. 5 depicts an inner operation of the bevel box 104, according to embodiments of the present disclosure. As discussed above, the bevel box 104 includes an input section 106 that is configured to receive an input shaft from a steering wheel of the commercial vehicle. According to some embodiments, the input section 106 of the bevel box 104 may be arranged along an axis 502 that is at an angle of ninety (90) degrees with respect to the input section of the linear EPS system 102, that is arranged along the substantially horizontal axis 304. The input section of the 106 of the bevel box 104 may connect to a first bevel gear 402. Similar to the input section 106, the first bevel gear 402 may also be arranged along the axis 406 at the angle of ninety (90) degrees with respect to the substantially horizontal axis 304.

The first bevel gear 402 may be mechanically coupled to a second bevel gear 404. In some embodiments, the second bevel gear 404 may be arranged along the substantially horizontal axis 304. The second bevel gear 404 may be connected to the input section of the gear assembly 206 of the linear EPS system 102. In some embodiments, the first bevel gear 402 and the second bevel gear 404 have gear teeth that are cut on a conical surface. The gear teeth of the first bevel gear 402 engage with corresponding teeth of the second bevel gear 404. In accordance with such embodiments, the first bevel gear 402 may receive rotational motion from an input shaft along an axis 502 that is arranged at an angle of substantially ninety (90) degrees with respect to the substantially horizontal axis 304. The input shaft is mechanically coupled to the input section 106 of the bevel box 104 along the axis 502. The rotation of the first bevel gear 402, may cause rotation of the second bevel gear 404, due to the engagement of gear teeth of the respective bevel gears. The second bevel gear 404 may be mechanically coupled to the gear assembly 206 of the linear EPS system 102 along the substantially horizontal axis 304. The rotation of the first bevel gear 404 and the second bevel gear 404 may transfer the rotational motion received along the axis 502 from the input shaft to rotational motion of the input section of the gear assembly 206 along the substantially horizontal axis 304. Thus, the first bevel gear 402 and the second bevel gear 404 transmit motion and change the direction of force from the input shaft, coming from the steering wheel of the commercial vehicle to the gear assembly 206 of the linear EPS system 102 of the commercial vehicle.

As described above, the gear assembly 206 may include a plurality of gears that are mechanically coupled to each other. A second end of the gear assembly 206 may be mechanically coupled to a steering nut stored in the second part 208 of the housing of the linear EPS system 102. In such embodiments, the rotation of the input shaft of the commercial vehicle, received at the input section 106 of the bevel box 104 is transmitted by the rotation of the first bevel gear 402 and the second bevel gear 404 to the gear assembly 206 to cause rotation of the plurality of gears of the gear assembly 206. The rotation of the plurality of gears of the gear assembly 206 transmits the rotation received at the gear assembly 206 to the steering nut disposed in a second part 208 of the housing of the linear EPS system 102. In some embodiments, the steering nut may be configured to surround the steering screw 302 and may be configured to rotate with respect to the steering screw 302. The rotation of the steering nut may cause linear motion of the steering screw 302 that may cause the steering motion of the wheels of the commercial vehicle.

In some embodiments, the input section 106 of the bevel box 104 may be arranged along an axis at any angle with respect to the substantially horizontal axis 304, in order to optimize design of the steering gear to accommodate for flexible driver positions.

While subject matter of the present disclosure has been illustrated and described in detail in the drawings and foregoing description, such illustration and description are to be considered illustrative or exemplary and not restrictive. Any statement made herein characterizing the invention is also to be considered illustrative or exemplary and not restrictive as the invention is defined by the claims. It will be understood that changes and modifications may be made, by those of ordinary skill in the art, within the scope of the following claims, which may include any combination of features from different embodiments described above.

The terms used in the claims should be construed to have the broadest reasonable interpretation consistent with the foregoing description. For example, the use of the article "a" or "the" in introducing an element should not be interpreted as being exclusive of a plurality of elements. Likewise, the recitation of "or" should be interpreted as being inclusive, such that the recitation of "A or B" is not exclusive of "A and B," unless it is clear from the context or the foregoing description that only one of A and B is intended. Further, the recitation of "at least one of A, B and C" should be interpreted as one or more of a group of elements consisting of A, B and C, and should not be interpreted as requiring at least one of each of the listed elements A, B and C, regardless of whether A, B and C are related as categories or otherwise. Moreover, the recitation of "A, B and/or C" or "at least one of A, B or C" should be interpreted as including any singular entity from the listed elements, e.g., A, any subset from the listed elements, e.g., A and B, or the entire list of elements A, B and C.

## Claims

1. A linear electric power steering (EPS) system for a commercial vehicle, the EPS system comprising:
an output section configured to mechanically couple with a gear assembly that is configured to mechanically couple with a ball nut of the linear EPS system;
an input section having a horizontal input end configured to mechanically couple with a first end of an input shaft, a second end of the input shaft being configured to mechanically couple with a steering wheel assembly of the commercial vehicle, the input section further comprising:
a bevel box mechanically coupled to the horizontal input end and configured to engage the first end of the input shaft at an angle with respect to the horizontal input end,
wherein a rotation of the input shaft is transmitted via the bevel box to the output section to cause rotation of the gear assembly, which causes rotation of the ball nut that surrounds a ball screw, and
wherein the rotation of the ball nut in a first direction around the ball screw causes a corresponding linear movement of the ball screw to initiate steering of the commercial vehicle.

2. The electric power steering of claim 1, wherein the bevel box comprises a second input section to receive the first end of the input shaft.

3. The electric power steering of claim 2, wherein the angle at which the second input section of the bevel box is configured to receive the first end of the input shaft is ninety degrees with respect to the horizontal input end of the input section.

4. The electric power steering of claim 2, wherein the angle at which the second input section of the bevel box is configured to receive the first end of the input shaft is seventy degrees with respect to the horizontal input end of the input section.

5. A method for providing of electric power steering (EPS) system for a commercial vehicle, method comprising:
providing an output section configured to mechanically couple with a gear assembly that is configured to mechanically couple with a ball nut of a linear steering gear;
providing an input section having a horizontal input end configured to mechanically couple with a first end of an input shaft, a second end of the input shaft being configured to mechanically couple with a steering wheel assembly of the commercial vehicle;
mechanically coupling a bevel box to the horizontal input end and configured to engage the first end of the input shaft at an angle with respect to the horizontal input end;
transmitting a rotation of the input shaft via the bevel box to the output section to cause rotation of the gear assembly, which causes rotation of the ball nut that surrounds a ball screw; and
causing a corresponding linear movement of the ball screw to initiate steering of the commercial vehicle based on the rotation of the ball nut.

6. The method of claim 5, wherein the bevel box comprises a second input section to receive the first end of the input shaft.

7. The method of claim 6, wherein the angle at which the second input section of the bevel box is configured to receive the first end of the input shaft is ninety degrees with respect to the horizontal input end of the input section.

8. The method of claim 6, wherein the angle at which the second input section of the bevel box is configured to receive the first end of the input shaft is seventy degrees with respect to the horizontal input end of the input section.
